# EUROPEAN PATENT SPECIFICATION

(11) **EP 2 947 465 B1**
(45) Date of publication and mention of the grant of the patent: **20.02.2019**
(21) Application number: 15168478.4
(22) Date of filing: 20.05.2015
(51) Int. Cl.: G01P 5/165, G01L 15/00

(54) **AIR DATA PROBE WITH MEANS FOR REDUCING BOUNDARY LAYER SEPARATION**
LUFTDATENSONDE MIT MITTELN ZUR VERMINDERUNG DER GRENZSCHICHTABLÖSUNG
CAPTEUR DE DONNÉES DE VOL COMPRENANT DES MOYENS POUR DIMINUER LA SÉPARATION DE LA COUCHE LIMITE

(30) Priority: 20.05.2014 US 201414282629
(43) Date of publication of application: 25.11.2015
(73) Proprietor: Rosemount Aerospace Inc., Burnsville, MN 55306-4898 (US)
(72) Inventor: DOOLITTLE, Charles Jae, Minneapolis, MN 55408 (US); FOSTER, Roger Duane, Burnsville, MN 55337 (US); MATHEIS, Brian Daniel, Lakeville, MN 55044 (US)
(74) Representative: Dehns

(56) References cited:
- EP-A1- 2 407 671
- EP-A1- 2 775 310
- GB-A- 1 066 935
- GB-A- 1 413 990
- GB-A- 2 490 170
- JP-A- 2006 009 976
- US-A- 5 313 700

## Description

### BACKGROUND OF THE INVENTION

### 1. Field of the Invention

The present invention relates to air data probes and more particularly to air data probes for aerospace applications.

### 2. Description of Related Art

A variety of air data probe devices are known in the art for aircraft flight control. Of such devices, many are directed to measuring Pitot pressure, static pressure, local angle of attack pressures, and angle of sideslip pressures as parameters for calculating pressure altitude, altitude rate, airspeed, Mach number, angle of attack, and angle of sideslip. The air data probe typically includes one or more static pressure ports located on the side of the probe head integral to the probe's surface which sense the atmospheric pressure outside of the aircraft. When these static pressure ports take consistent pressure measurements, they can provide accurate and consistent calculations of the above mentioned parameters.

During periods where an air data probe is at a high altitude, angle of attack, and/or Mach number, it is possible for the air data probe to have inconsistent measurement errors in the static ports. There can be considerable variations from one probe to another, suggesting there is a sensitivity to an unknown variable at the conditions described above.

Such conventional methods and systems generally have been considered satisfactory for their intended purpose. However, there is still a need to advance the state of the art by reducing data inconsistencies in air data probes at high altitude, Mach, and/or angle of attack. The present invention provides a solution for these problems.

GB 1 066 935 discloses a ringed static probe wherein a raised ring surrounds the probe a small distance downstream of the forward end in order to cause turbulence in the boundary layer.

GB 1 413 990 discloses a static probe including a protruding member that surrounds the probe and extends radially from the probe surface. The protruding member contains a series of serrations for causing turbulence in the boundary layer.

### SUMMARY OF THE INVENTION

Viewed from a first aspect, there is provided an air data probe comprising: a probe head, the probe head defining a longitudinal axis with a forward tip and a probe head surface; and a raised portion defined in the probe head surface aft of the forward tip, wherein the raised portion is raised radially relative to the probe head surface, characterised in that the air data probe further comprises a single static port proximate the forward tip and the raised portion is arranged in a single strip or two opposing strips defined along the surface of the probe head in an axial direction, wherein a center of the one or both strip(s) is located, in a circumferential direction, 90 degrees from the static port to trip a fluid boundary layer passing over the probe head to transition from laminar to turbulent for reducing boundary layer separation for consistent readings at high altitudes and high mach numbers.

The raised portion is defined proximate the forward tip. The raised portion can be configured and adapted to trip a fluid boundary layer at low Reynolds numbers on the order of 10⁵, at a speed of approximately Mach 0.9, and/or at a non-zero angle of attack.

The raised portion can include a group of discrete raised portions and/or can be arranged in a zig-zag pattern. The zig-zag pattern can have a generally constant lengthwise geometric pattern. The raised portion can include sharp edged and/or curved transitions between a top surface of the raised portion and a side of the raised portion. The top surface of the raised portion can define a perimeter with a rectangle shape, a square shape, a triangle shape, a circle shape, a cross shape, a star shape, and/or any other suitable shape.

A method of manufacturing an air data probe includes forming a probe head and applying a raised portion to a surface of the probe head aft of the forward tip. Applying the raised portion to the surface of the probe head includes using brazing, additive manufacturing, adhesives, and/or any other suitable technique.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, exemplary embodiments thereof will be described in detail herein below by way of example only and with reference to certain figures, wherein:
Fig. 1 is a perspective view of an exemplary embodiment of an air data probe constructed in accordance with the present invention, showing a raised portion and a schematic depiction of the air flow over the air data probe;
Fig. 2 is a cross-sectional view of a portion of the air data probe of Fig. 1, showing the sharp edges of the raised portion.
Fig. 3 is a cross-sectional view of a portion of another exemplary embodiment of an air data probe constructed in accordance with the present invention, showing the raised portion with curved edges;
Fig. 4 is a perspective view of another exemplary embodiment of an air data probe constructed in accordance with the present invention, showing a zig-zag raised portion;
Fig. 5 is a perspective view of an example of an air data probe that does not form an embodiment of the present invention, showing a raised portion defined annularly around the probe head;
Fig. 6 is a perspective view of another exemplary embodiment of an air data probe constructed in accordance with the present invention, showing a raised portion including a group of discrete raised portions having circular shaped perimeters;
Fig. 7 is a schematic plan view of exemplary embodiments of discrete raised portions constructed in accordance with the present invention, showing the perimeters of the discrete raised portions having a triangle shape, a rectangle shape, a cross shape, and a star shape; and
Fig. 8 is an enlarged plan view of a portion of another exemplary embodiment of an air data probe constructed in accordance with the present invention, showing hump shaped discrete raised portions.

### DETAILED DESCRIPTION OF THE PREFERRED EMBODIMENTS

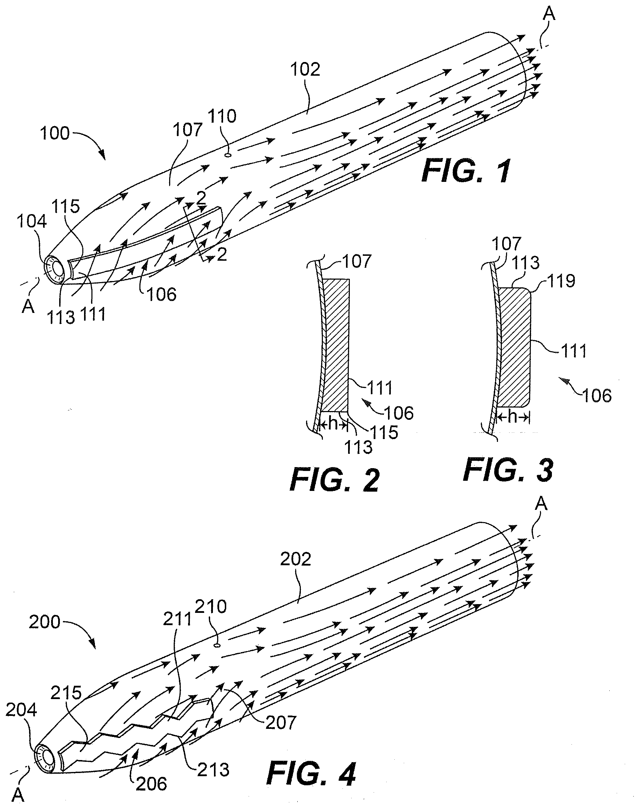

Reference will now be made to the drawings wherein like reference numerals identify similar structural features or aspects of the subject invention. For purposes of explanation and illustration, and not limitation, a partial view of an exemplary embodiment of an air data probe in accordance with the invention is shown in Fig. 1 and is designated generally by reference character 100. Other exemplary embodiments of air data probes in accordance with the invention, or aspects thereof, are provided in Figs. 2-8 as will be described.

As shown in Fig. 1, an air data probe 100 includes a probe head 102 and a raised portion 106. Probe head 102 defines a longitudinal axis A and includes a forward tip 104 and a probe head surface 107. Air data probe 100 includes a static port 110 proximate forward tip 104. Raised portion 106 is defined in probe head surface 107 aft of forward tip 104 and is raised radially relative to probe head surface 107. Raised portion 106 is configured and adapted to trip a fluid boundary layer passing over probe head 102 to transition from laminar to turbulent for reducing and/or controlling boundary layer separation for consistent readings at low Reynolds number (Re) flight conditions, high altitudes, angle of attack and/or high Mach number. Raised portion 106 is arranged in a strip defined along surface 107 of probe head 102 in an axial direction. In the circumferential direction, the center of raised portion 106 is located 90 degrees from static port 110.

With continued reference to Fig. 1, although raised portion 106 is shown as a single strip, it will be appreciated that an opposed, e.g. circumferentially opposed, raised portion can be defined along probe head surface 107 on the opposite side from raised portion 106.

With reference now to Fig. 2, raised portion 106 includes sharp edged transitions 115 between a top surface 111 of raised portion 106 and a side 113 of raised portion 106. Raised portion 106 is configured and adapted to trip turbulence in a fluid boundary layer at low Re flight conditions, on the order of 10⁵, and at a speed of approximately Mach 0.9. At angles of side slip and/or angles of attack, these conditions create a cross-flow as depicted schematically by the flow arrows in Fig. 1. The raised portion 106 trips turbulence in the boundary layer of the flow crossing it in these conditions to reduce occurrences of boundary layer separation in the vicinity of static port 110.

As shown in Fig. 3, raised portion 106 optionally includes curved transitions 119 between top surface 111 and side 113. Curved transitions 119 can be in place of sharp edged transitions 115 or in addition to sharp edged transitions 115. It is also contemplated that raised portion 106 can include curved transitions 119 between sides 113 and probe head surface 107, similar to the cross-section having a hump shape 626, described below. Raised portion 106 can also include curved transitions 119 on the forward and aft ends of the strip.

Now with reference to Fig. 4, an air data probe 200 includes a probe head 202, a forward tip 204, a static port 210, and a probe head surface 207, and is generally similar air data probe 100, described above. Air data probe 200 includes a raised portion 206 arranged in a zig-zag pattern in an axial direction along probe head 202. Raised portion 206 is similar to raised portion 106, as described above, in that it includes sharp edged transitions 215 and is arranged in an axial direction. The zig-zag pattern can have a generally constant lengthwise geometric pattern, or any suitable variation thereof for a given application. Raised portion 206 is configured and adapted to trip turbulence as described above with respect to raised portion 106.

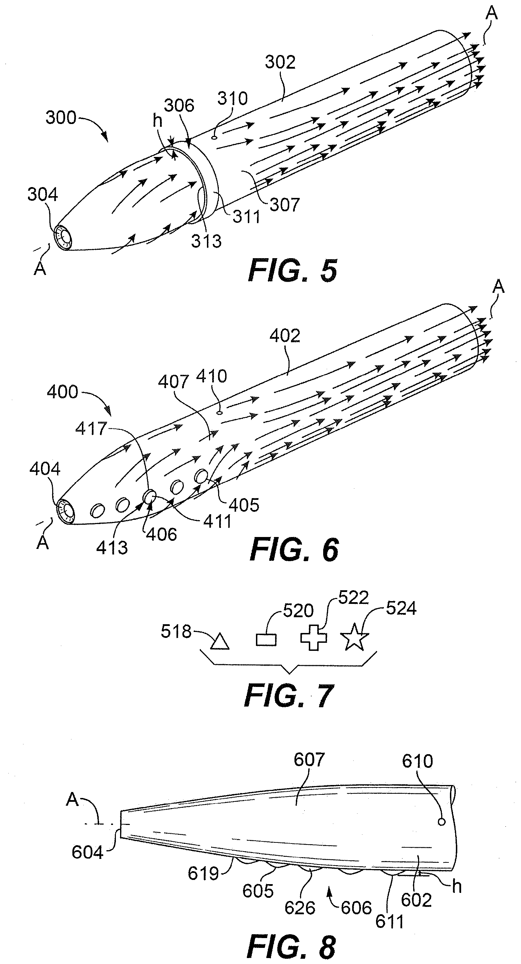

Now with reference to Fig. 5, which does not show an embodiment of the present invention, exemplary air data probe 300 is generally similar to air data probe 100 in that it includes a probe head 302, a forward tip 304, a static port 310, and a probe head surface 307. Air data probe 300 includes a raised portion 306 is defined annularly around probe head 302 e.g. a ring. Raised portion 306 is defined axially between forward tip 304 and static port 310, respectively. It is contemplated that raised portion 306 can be at any axial position along probe head surface 307. Raised portion 306 is defined in a lateral plane, wherein the lateral plane is perpendicular to longitudinal axis A. The angle of the plane in which raised portion 306 is defined can vary as suitable for a given application.

With continued reference to Fig. 5, raised portion 306 includes sharp edged transitions 315 between a top surface 311 of raised portion 306 and a side 313 of raised portion 306, similar to raised portion 106, described above. In addition, raised portion 306 has a similar width-wise cross-section to that of raised portion 106. It is contemplated that raised portion 306 can include curved transitions, e.g. curved transitions 119, described above with respect to Fig. 3. Raised portion 306 is configured and adapted to trip turbulence, similar to raised portion 106 described above.

As shown in Fig. 6, air data probe 400 is generally similar to air data probe 100 in that it includes a probe head 402, a forward tip 404, a static port 410, and a probe head surface 407. A raised portion 406 is defined in probe head 402 as a group of discrete raised portions 405 arranged in an axially extending line. A top surface 411 of discrete raised portion 405 defines a perimeter 417 with a circle shape 418. Raised portion 406 is configured and adapted to trip turbulence, similar to raised portion 106 described above.

Now with reference to Figs. 6 and 7, perimeter 417 of top surface 411 of discrete raised portions 405 can have a variety of different shapes. For example, perimeter 417 can have a triangle shaped perimeter 518, a rectangle shape perimeter 520, a cross shaped perimeter 522, a star shaped perimeter 524, and/or any other suitable perimeter. A variety of different perimeter shapes can be used depending on what is suitable for a given application. While shown and described in the exemplary context of each discrete varied portion being identical, the size and shape can be varied within the group.

As shown in Fig. 8, air data probe 600 is generally similar to air data probe 100 in that it includes a probe head 602, a forward tip 604, a static port 610, and a probe head surface 607. A raised portion 606 is defined in probe head 602 as a group of discrete raised portions 605. Raised portion 606 is configured and adapted to trip turbulence, similar to raised portion 106 described above. Each discrete raised portion 605 includes a cross-section having a hump shape 626. Discrete raised portions 605 include curved transitions 619 between a top surface 611 of hump and surface 607 of probe head. The other raised portions, e.g. raised portions 206, 306, and 406, can include curved transitions between their top surfaces, e.g. top surfaces 211, 311, and 411 and their sides, e.g. sides 213, 313 and 413, either in place of sharp edged transitions, e.g. sharp edged transition 215, or in addition to the sharp edged transitions. It is also contemplated that the other raised portions can include curved transitions between their sides and the probe head surfaces, e.g. surfaces 107, 207, 307 and 407, of their respective probe heads.

Any raised portion, e.g. raised portions 106, 206, 306, 406 and 606, can be used in conjunction with one or more other raised portions on the same probe head in a variety of suitable arrangements. Any of the shapes e.g. shapes 418, 518, 520, 522, 524, 626, can be used together on the same probe head in a variety of suitable arrangements.

By systematically varying parameters of the raised portion, e.g. raised portions 106, 206, 306, 406 and 606, the features discussed above can be analyzed and optimized for specific applications. For example, the lateral width of the raised portion, axial length of the raised portion, and effective height, h, shown in Figs. 2 and 3, are three parameters that can be adjusted to tailor performance. Effective height, h, is the radial distance from the probe head surface, e.g. probe head surfaces 107, 207, 307, 407 and 607, to the top surface, e.g. top surfaces 111, 211, 311, 411 and 611, of the raised portion.

With further reference to Figs. 1-8, as air flows over a probe head, e.g. probe heads 102, 202, 302, 402 and 602, shown schematically from left to right in Figs. 1, and 4-6, a laminar boundary layer develops along the increasing diameter of the probe head forward tip, e.g. forward tips 104, 204, 304, 404 and 604. Upon reaching a raised portion, e.g. raised portions 106, 206, 306, 406 and 606, the velocity profile of the laminar boundary layer is perturbed, at which time it is expected to transition to a turbulent state. Once a fully developed turbulent boundary layer is formed it continues along the surface of the probe until reaching a static port, e.g. static ports 110, 210 310, 410 and 610. Although shown and described herein with reference to one or two static ports, any suitable number of static ports may be utilized on the probe head.

A method of manufacturing an air data probe, e.g. air data probes 100, 200, 400 and 600, includes forming a probe head, e.g. probe heads 102, 202, 402 and 602, and applying a raised portion, e.g. raised portions 106, 206, 406 and 606, to a surface, e.g. surfaces 107, 207, 407 and 607 of the probe head aft forward tip 104. Applying the raised portion to the surface of the probe head can include using brazing, additive manufacturing, adhesives, or the like. Moreover, raised portions and probe heads of similar or dissimilar materials can be used as needed on an application to application basis. It is also contemplated that a method of manufacturing the air data probe can include forming the probe head and the raised portion from a one-step machining process, for example, the air data probe and the raised portion can be formed by machining a single piece of material.

The methods and systems of the present invention, as described above and shown in the drawings, provide for air data probes with superior properties including reducing and/or controlling boundary layer separation for consistent readings at low Re, e.g. at high altitudes, Mach number, and/or angle of attack. While the apparatus and methods of the subject invention have been shown and described with reference to certain embodiments, those skilled in the art will readily appreciate that changes and/or modifications may be made thereto without departing from the scope of the subject invention as defined by the appended claims.

## Claims

1. An air data probe comprising:
a probe head (102;202;402;602), the probe head defining a longitudinal axis (A) with a forward tip (104;204;404;604) and a probe head surface (107;207;407;607); and
a raised portion (106;206;406;606) defined in the probe head surface aft of the forward tip, wherein the raised portion is raised radially relative to the probe head surface, **characterised in that** the air data probe further comprises a single static port (110;210;410;610) proximate the forward tip and the raised portion is arranged in a single strip or two opposing strips defined along the surface (107;207;407;607) of the probe head (102;202;402;602) in an axial direction, wherein a center of the one or both strip(s) is located, in a circumferential direction, 90 degrees from the static port (110;210;410;610) to trip a fluid boundary layer passing over the probe head to transition from laminar to turbulent for reducing boundary layer separation for consistent readings at high altitudes and high mach numbers.

2. An air data probe as recited in claim 1, wherein the raised portion (106;206;406;606) is defined proximate the forward tip (104;204;404;604).

3. An air data probe as recited in claim 1 or 2, wherein the raised portion (106;206;406;606) is configured and adapted to trip a fluid boundary layer at low Reynolds numbers on the order of 10⁵.

4. An air data probe as recited in any preceding claim, wherein the raised portion (106;206;406;606) is configured and adapted to trip a fluid boundary layer at a speed of approximately Mach 0.9.

5. An air data probe as recited in any preceding claim, wherein the raised portion (106;206;406;606) is configured and adapted to trip a fluid boundary layer at an angle of attack greater than or less than zero degrees.

6. An air data probe as recited in any preceding claim, wherein the raised portion (406;606) includes a group of discrete raised portions (405;605).

7. An air data probe as recited in claim 1 or 2, wherein the raised portion (206) is arranged in a zig-zag pattern, wherein the zig-zag pattern has a generally constant lengthwise geometric pattern.

8. An air data probe as recited in any preceding claim, further comprising sharp edged transitions (115;215) between a top surface (111;211;411) of the raised portion (106;206;406) and a side (113;213;413) of the raised portion.

9. An air data probe as recited in any preceding claim, further comprising curved transitions (119;619) between a top surface (111;611) of the raised portion (106;606) and a side (113;613) of the raised portion.

10. An air data probe as recited in any preceding claim, wherein a top surface of the raised portion defines a perimeter with a shape (518;520;522;524) selected from the group consisting of a rectangle, a triangle, a square, a circle, a cross and a star.

11. A method of manufacturing the air data probe (100;200;400;600) of any preceding claim, the method comprising:
forming a probe head (102;202;402;602), the probe head defining a longitudinal axis (A) with a forward tip (104;204;404;604) and aft base; and
applying a raised portion (106;206;406;606) to a surface (107;207;407;607) of the probe head aft of the forward tip, wherein applying the raised portion to the surface of the probe head includes using one of brazing, additive manufacturing and adhesives.

## Patentansprüche

1. Luftdatensonde, umfassend
einen Sondenkopf (102;202;402;602), wobei der Sondenkopf eine Längsachse (A) mit einer nach vorn gerichteten Spitze (104;204;404;604) und eine Sondenkopffläche (107;207;407;607) definiert; und
einen erhabenen Abschnitt (106;206;406;606), der in der Sondenkopffläche hinter der nach vorn gerichteten Spitze definiert ist, wobei der erhabene Abschnitt im Verhältnis zu der Sondenkopffläche radial erhoben ist, **dadurch gekennzeichnet, dass** die Luftdatensonde ferner eine einzelne statische Öffnung (110;210;410;610) nahe der nach vorn gerichteten Spitze umfasst und der erhabene Abschnitt in einem einzelnen Streifen oder zwei entgegengesetzten Streifen angeordnet ist, die entlang der Fläche (107;207;407;607) des Sondenkopfes (102;202;402;602) in einer Axialrichtung angeordnet sind, wobei sich eine Mitte des einen oder der beiden Streifen in einer Umfangsrichtung 90 Grad von der statischen Öffnung (110;210;410;610) befindet, um eine über den Sondenkopf verlaufende Fluidgrenzschicht abzulenken, sodass sie von laminar zu turbulent übergeht, um eine Grenzschichtablösung für einheitliche Messwerte bei großen Höhen und hohen Mach-Zahlen zu vermindern.

2. Luftdatensonde nach Anspruch 1, wobei der erhabene Abschnitt (106;206;406;606) nahe der nach vorn gerichteten Spitze (104;204;404;604) definiert ist.

3. Luftdatensonde nach Anspruch 1 oder 2, wobei der erhabene Abschnitt (106;206;406;606) zum Ablenken einer Fluidgrenzschicht bei niedrigen Reynolds-Zahlen im Bereich von 10⁵ konfiguriert und ausgelegt ist.

4. Luftdatensonde nach einem vorhergehenden Anspruch, wobei der erhabene Abschnitt (106;206;406;606) zum Ablenken einer Fluidgrenzschicht bei einer Geschwindigkeit von etwa Mach 0,9 konfiguriert und ausgelegt ist.

5. Luftdatensonde nach einem vorhergehenden Anspruch, wobei der erhabene Abschnitt (106;206;406;606) zum Ablenken einer Fluidgrenzschicht bei einem Anstellwinkel größer gleich null Grad konfiguriert und ausgelegt ist.

6. Luftdatensonde nach einem vorhergehenden Anspruch, wobei der erhabene Abschnitt (406;606) eine Gruppe von einzelnen erhabenen Abschnitten (405;605) beinhaltet.

7. Luftdatensonde nach Anspruch 1 oder 2, wobei der erhabene Abschnitt (206) in einem Zickzack-Muster angeordnet ist, wobei das Zickzack-Muster ein im Allgemeinen konstantes längsgerichtetes geometrisches Muster aufweist.

8. Luftdatensonde nach einem vorhergehenden Anspruch, ferner umfassend scharfkantige Übergänge (115;215) zwischen einer oberen Fläche (111;211;411) des erhabenen Abschnitts (106;206;406) und einer Seite (113;213;413) des erhabenen Abschnitts.

9. Luftdatensonde nach einem vorhergehenden Anspruch, ferner umfassend gekrümmte Übergänge (119;619) zwischen einer oberen Fläche (111;611) des erhabenen Abschnitts (106;606) und einer Seite (113;613) des erhabenen Abschnitts.

10. Luftdatensonde nach einem vorhergehenden Anspruch, wobei eine obere Fläche des erhabenen Abschnitts einen Umfang mit einer Form (518;520;522;524) definiert, die ausgewählt ist aus der Gruppe, bestehend aus einem Rechteck, einem Dreieck, einem Quadrat, einem Kreis, einem Kreuz und einem Stern.

11. Verfahren zum Herstellen der Luftdatensonde (100;200;400;600) nach einem vorhergehenden Anspruch, wobei das Verfahren Folgendes umfasst:
Ausbilden eines Sondenkopfes (102;202;402;602), wobei der Sondenkopf eine Längsachse (A) mit einer nach vorn gerichteten Spitze (104;204;404;604) und einer hinteren Basis definiert; und
Anbringen eines erhabenen Abschnitts (106;206;406;606) auf einer Fläche (107;207;407;607) des Sondenkopfes hinter der nach vorn gerichteten Spitze, wobei das Anbringen des erhabenen Abschnitts auf der Fläche des Sondenkopfes Verwenden eines von Hartlöten, additiver Fertigung und Haftmitteln beinhaltet.

## Revendications

1. Capteur de données de vol comprenant :
une tête de capteur (102 ; 202 ; 402 ; 602), la tête de capteur définissant un axe longitudinal (A) avec une pointe avant (104 ; 204 ; 404 ; 604) et une surface de tête de capteur (107 ; 207 ; 407 ; 607) ; et
une portion relevée (106 ; 206 ; 406 ; 606) définie dans la surface de tête de capteur derrière la pointe avant, dans lequel la portion relevée est relevée radialement par rapport à la surface de tête de capteur, **caractérisé en ce que** le capteur de données de vol comprend en outre un orifice statique unique (110 ; 210 ; 410 ; 610) à proximité de la pointe avant et la portion relevée est agencée dans une bande unique ou deux bandes opposées définies le long de la surface (107 ; 207 ; 407 ; 607) de la tête de capteur (102 ; 202 ; 402 ; 602) dans une direction axiale, dans lequel un centre de l'une ou des deux bande (s) est situé, dans une direction circonférentielle, 90 degrés de l'orifice statique (110 ; 210 ; 410 ; 610) pour déclencher une couche limite fluide passant au-dessus de la tête de capteur pour passer de laminaire à turbulent pour diminuer la séparation de couche limite pour des lectures cohérentes à altitudes élevées et nombres de Mach élevés.

2. Capteur de données de vol selon la revendication 1, dans lequel la portion relevée (106 ; 206 ; 406 ; 606) est définie à proximité de la pointe avant (104 ; 204 ; 404 ; 604).

3. Capteur de données de vol selon la revendication 1 ou 2, dans lequel la portion relevée (106 ; 206 ; 406 ; 606) est configurée et adaptée pour déclencher une couche limite fluide à des nombres de Reynolds faibles de l'ordre de 10⁵.

4. Capteur de données de vol selon une quelconque revendication précédente, dans lequel la portion relevée (106 ; 206 ; 406 ; 606) est configurée et adaptée pour déclencher une couche limite fluide à une vitesse d'environ Mach 0,9.

5. Capteur de données de vol selon une quelconque revendication précédente, dans lequel la portion relevée (106 ; 206 ; 406 ; 606) est configurée et adaptée pour déclencher une couche limite fluide à un angle d'attaque supérieur ou inférieur à zéro degré.

6. Capteur de données de vol selon une quelconque revendication précédente, dans lequel la portion relevée (406 ; 606) comprend un groupe de portions relevées discrètes (405 ; 605) .

7. Capteur de données de vol selon la revendication 1 ou 2, dans lequel la portion relevée (206) est agencée selon un motif en zigzag, dans lequel le motif en zigzag a un motif géométrique généralement constant dans le sens de la longueur.

8. Capteur de données de vol selon une quelconque revendication précédente, comprenant en outre des transitions à bord tranchant (115 ; 215) entre une surface supérieure (111 ; 211 ; 411) de la portion relevée (106 ; 206 ; 406) et un côté (113 ; 213 ; 413) de la portion relevée.

9. Capteur de données de vol selon une quelconque revendication précédente, comprenant en outre des transitions incurvées (119 ; 619) entre une surface supérieure (111 ; 611) de la portion relevée (106 ; 606) et un côté (113 ; 613) de la portion relevée.

10. Capteur de données de vol selon une quelconque revendication précédente, dans lequel une surface supérieure de la portion relevée définit un périmètre avec une forme (518 ; 520 ; 522 ; 524) sélectionnée dans le groupe constitué d'un rectangle, d'un triangle, d'un cercle, d'une croix et d'une étoile.

11. Procédé de fabrication du capteur de données de vol (100 ; 200 ; 400 ; 600) selon une quelconque revendication précédente, le procédé comprenant :
la formation d'une tête de capteur (102 ; 202 ; 402 ; 602), la tête de capteur définissant un axe longitudinal (A) avec une pointe avant (104 ; 204 ; 404 ; 604) et base arrière ; et
l'application d'une portion relevée (106 ; 206 ; 406 ; 606) sur une surface (107 ; 207 ; 407 ; 607) de la tête de capteur derrière la pointe avant, dans lequel l'application de la portion relevée sur la surface de la tête de capteur comprend l'utilisation d'un parmi le brasage, la fabrication additive et les adhésifs.
